# DEMANDE DE BREVET EUROPEEN

(11) **EP 4 651 049 A1**
(43) Date de publication de la demande: **19.11.2025**
(21) Numéro de dépôt: 25175814.0
(22) Date de dépôt: 12.05.2025
(51) Int. Cl.: G06Q 10/08, B65G 61/00, B65G 57/00

(54) **SYSTÈME POUR LA CONSTITUTION AUTOMATIQUE DE PALETTES SUPPORTANT UN ENSEMBLE DE COLIS PAR DÉTERMINATION PRÉALABLE D'UN PLAN DE PALETTE OPTIMISÉ**

(30) Priorité: 14.05.2024 FR 2404926
(71) Demandeur: Equans Digital Robotic Integration, 45700 Villemandeur (FR); Ineo Tinea, 38240 Meylan (FR); Equans, 92400 Courbevoie (FR)
(72) Inventeur: PERRETIN, Denis, 45210 LA SELLE SUR LE BIED (FR); SEGRET, Pascal, 41600 LAMOTTE-BEUVRON (FR); EGEA, Mathias, 45700 VILLEMANDEUR (FR); BECU, Sylvain, 91470 BOULLAY LES TROUX (FR); PAYET, Jean-Michel, 45110 CHÂTEAUNEUF SUR LOIRE (FR)
(74) Mandataire: Regimbeau

(57) **Abrégé**

Procédé de constitution automatique d'une palette (103) supportant un ensemble de colis (101) appartenant à une commande, comprenant des étapes de
- réception d'informations (3) relatives à l'ensemble de colis comportant au moins des dimensions pour chaque colis ;
- établissement d'un plan de palette à partir de ces informations ;
- aiguillage de colis (101) vers un convoyeur (105) d'une sous-plateforme affectée à la commande ;
- stockage des colis (101) reçus au moyen du convoyeur (105) dans un espace de stockage temporaire (104) par un bras préhenseur robotisé (102) ;
- lorsque l'ensemble de colis est stocké dans l'espace de stockage temporaire, constitution de la palette (103) par la bras préhenseur (102), en sélectionnant les colis dans l'espace de stockage (104) selon un ordre dépendant du plan de palette, et en les positionnant, successivement, selon ce plan de palette

## Description

### DOMAINE TECHNIQUE

La présente invention est relative à la constitution de palettes de colis dans un environnement de gestion de la chaîne logistique (ou « *Supply Chain Management* » en anglais). Elle s'applique en particulier aux entrepôts devant préparer des palettes de colis à la suite de commandes émanant de clients pour les fournir à des transporteurs.

Ce processus de mise en palette est habituellement partiellement manuel. Même si des outils existes (véhicules, grues, robots de préhension, robots mobiles...), ceux-ci n'interviennent que pour certaines étapes du processus. L'intervention humaine reste nécessaire à la fois pour des étapes de pilotage de ces outils mais aussi pour des étapes de manutention notamment pour transférer un colis d'un outil à un autre, ceux-ci n'étant pas nécessairement adaptés pour collaborer de façon pleinement automatisée.

Une des raisons sous-jacentes à ce manque d'automatisation de bout-en-bout est la non-uniformité des colis : ceux-ci peuvent être de dimensions (hauteur, largeur, longueur) variées et de poids également variés. Dès lors, un processus entièrement automatique s'avère complexe à mettre en œuvre.

Des propositions d'automatisation existent dans le cadre de colis homogènes. Toutefois, ces propositions ne peuvent donc s'appliquer que dans des cas bien particuliers où un entrepôt, ou un vendeur, serait mono-produit, ou bien ne livrerait que des produits d'une même dimension.

Il pourrait être envisagé de conditionner des produits, ou articles, de dimensions variées dans des colis de même dimension. On pourrait ramener la problématique d'objets hétérogènes à une gestion automatisable de colis homogènes.

Toutefois, une telle approche n'est pas acceptable pour au moins deux raisons. Tout d'abord, elle nécessite un surdimensionnement des colis afin de les adapter aux articles les plus volumineux, ce qui engendre un encombrement plus important et donc augmente potentiellement le coût logistique attaché à la commande d'un ensemble de produits. En outre, pour éviter les mouvements des articles contenus dans les colis du fait de ce surdimensionnement, les colis sont remplis de feuilles de papiers froissés, ou de morceaux de carton ou d'autres matières, ce qui engendre un coût environnemental prohibitif. Ce procédé peut également aller à l'encontre de réglementations.

L'état de la technique n'apporte ainsi pas de solutions satisfaisantes à la problématique de la constitution de palettes à partir de colis dans le cas général.

### EXPOSÉ DE L'INVENTION

L'invention vise donc à améliorer les propositions actuelles de l'état de la technique. En particulier, elle vise à automatiser le processus de constitution de palettes à partir d'un ensemble de colis correspondant à une commande d'un client, en vue de sa transmission à un agent en charge de son transport vers ce client.

À ces fins, selon un premier aspect, la présente invention peut être mise en œuvre par un procédé de constitution automatique d'une palette supportant un ensemble de colis appartenant à une commande, comprenant des étapes de
- réception d'informations relatives audit ensemble de colis comportant au moins des dimensions pour chaque colis ;
- établissement d'un plan de palette à partir desdites informations ;
- aiguillage de colis vers un convoyeur d'une sous-plateforme affectée à ladite commande ;
- stockage desdits colis reçus au moyen dudit convoyeur dans un espace de stockage temporaire par un bras préhenseur robotisé ;
- lorsque ledit ensemble de colis est stocké dans ledit espace de stockage temporaire, constitution de ladite palette par ledit bras préhenseur robotisé, en sélectionnant lesdits colis dans ledit espace de stockage selon un ordre dépendant dudit plan de palette, et en les positionnant sur ladite palette, successivement, selon ledit plan de palette

Ainsi, par l'automatisation de la constitution des palettes, le procédé permet un gain de temps pour l'opérateur de l'entrepôt. Également, ce mécanisme automatique est moins sujet à erreur et permet d'optimiser les palettes obtenues permettant d'optimiser la relation avec le transporteur et les clients finaux. En outre, en évitant les étapes de manutention humaine, même dans le cas de palettes hétérogènes (comportant des colis de dimensions variées), on limite l'impact sur la santé des opérateurs humains (troubles musculosquelettiques notamment), et on permet à ceux-ci de s'occuper de fonctions à plus forte valeur ajoutée.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit positionnement comprend une rotation dudit colis par ledit bras préhenseur robotisé, selon des données d'orientation cible contenues dans ledit plan de palette, et des données d'orientation courantes obtenues par un dispositif de détection associé audit bras préhenseur.
- un colis reçu est identifié par un lecteur optique adapté pour décoder une étiquette apposée sur ledit colis reçu.
- lesdites étapes de stockage et de sélection comprennent un dialogue afin de permettre l'accès dudit bras préhenseur robotisé à un emplacement déterminé dudit espace de stockage temporaire.
- ledit plan de palette est déterminé en fonction de données de poids associés à chaque colis contenu dans lesdites informations, afin de positionner un centre de gravité final de ladite palette dans une zone substantiellement basse et centrale de ladite palette.
- plusieurs palettes sont constituées à partir dudit ensemble de colis.
- ladite palette est positionnée sur un robot mobile, ledit robot mobile pouvant être appelé à proximité dudit bras préhenseur robotisé par l'actionnement d'une télécommande par ledit bras préhenseur robotisé

Un autre aspect de l'invention concerne un système pour la constitution automatique d'une palette supportant un ensemble de colis appartenant à une commande, comportant un dispositif de contrôle et une plateforme logistique, ledit dispositif de contrôle étant adapté pour la réception d'informations relatives audit ensemble de colis comportant au moins des dimensions pour chaque colis, et pour l'établissement d'un plan de palette à partir desdites informations, et ladite plateforme logistique comportant un aiguillage pour aiguiller des colis vers un convoyeur d'une sous-plateforme affectée à ladite commande, un espace de stockage temporaire, un convoyeur et un bras préhenseur robotisé, adaptés pour stocker lesdits colis reçus au moyen dudit convoyeur dans ledit espace de stockage temporaire par ledit bras préhenseur robotisé, et pour, lorsque ledit ensemble de colis est stocké dans ledit espace de stockage temporaire, constituer ladite palette par ledit bras préhenseur robotisé, en sélectionnant lesdits colis dans ledit espace de stockage selon un ordre dépendant dudit plan de palette, et en les positionnant sur ladite palette, successivement, selon ledit plan de palette.

Un autre aspect de l'invention concerne un programme d'ordinateur apte à être mis en œuvre sur un ordinateur associé à un système de préparation de palettes, comprenant des instructions de code qui, lorsqu'il est exécuté par un processeur, réalise les étapes du procédé tel que précédemment décrit.

Un autre aspect de l'invention concerne un support de données sur lequel a été mémorisé au moins une série d'instructions de code de programme pour l'exécution d'un procédé tel que précédemment défini.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- La figure 1 illustre les interactions entre différents sous-systèmes coopérant en vue de la constitution d'une ou plusieurs palettes, selon des modes de réalisation de l'invention.
- La figure 2 schématise une plateforme logistique, selon un mode de réalisation du système de constitution de palettes.

### EXPOSÉ DÉTAILLÉ DE MODES DE RÉALISATION PARTICULIERS

Un des objectifs du procédé décrit est de constituer des palettes de colis pour des articles (ou produits) ayant fait l'objet de commandes à envoyer à des clients par transporteur.

Ces commandes sont typiquement gérées par un outil logiciel spécifique appelé Progiciel de Gestion Intégré, PGI (ou ERP pour « Enterprise Resource Planning » en anglais). Un outil PRI peut être considéré comme une collection de modules logiciels adaptés pour gérer différents processus opérationnels d'une entreprise en intégrant plusieurs fonctions de gestion : solution de gestion des commandes, solution de gestion des stocks, etc. Dans le cadre du procédé proposé, les processus de gestion de commande sont principalement considérés.

Cet outil spécifique est ainsi adapté pour gérer les commandes de clients ainsi que les stocks afin de préparer une commande avec les articles disponibles.

Une commande peut être définie comme un ensemble d'articles commandés par un client et attendus à une adresse de livraison. Une commande peut donc être constituée de plusieurs « lignes », chaque ligne concernant un article.

Une commande donnée peut être décomposée en plusieurs ordres de fabrications (OF). L'intérêt de subdiviser une même commande en plusieurs ordres de fabrication est multiple et appartient à la logique propre de l'entreprise et/ou de ses clients. Par exemple, un client peut souhaiter subdiviser une commande pour recevoir des palettes distinctes (correspondants à un ordre de fabrication chacune) afin de faciliter sa gestion, par exemple si chaque palette est destinée à un étage ou un secteur particulier de son propre entrepôt.

Les articles sont empaquetés sous forme de colis. Par définition, un colis est un objet (ou article) emballé destiné à être expédié. Il est ici destiné à être placé sur une palette pour être envoyé.

Selon le procédé proposé, les colis peuvent être de dimensions variées, et donc adaptés aux dimensions variées des articles.

Une palette est typiquement un socle (en bois ou en d'autres matériaux) sur lequel sont positionné des colis. Il existe plusieurs types de palette qui diffèrent par leurs dimensions (notamment largeur et longueur) et éventuellement par la nature du bois ou du traitement du bois appliqué (pour certains pays destinataires).

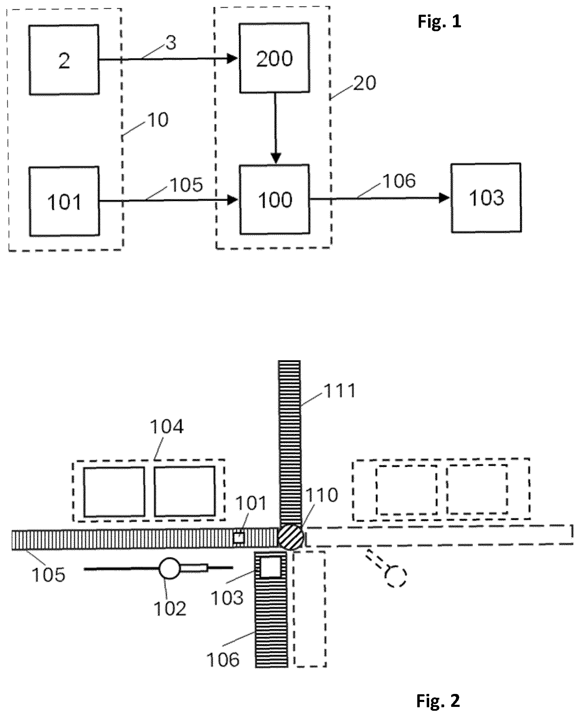

La **figure 1** illustre les interactions entre différents sous-systèmes coopérant en vue de la constitution d'une ou plusieurs palettes.

Une entreprise gestionnaire d'un entrepôt 10 dispose d'un ensemble de colis 101 (préparé pour l'expédition) et un outil PRI, 2, adapté pour la gestion des stocks dans cet entrepôt et des commandes.

L'outil 2 est adapté pour transmettre des informations 3 relatives aux palettes 103 à constituer à partir des colis 1. Ces informations sont transmises à un système 20 de constitution de palettes. Ce système 20 peut être vu comme un système autonome prenant, en entrée, des colis 101 et des informations 3 relatives aux palettes à constituer, et ayant pour sortie une palette 103 finie. Ce système 20 et le procédé qu'il met en œuvre sont deux objets qui peuvent être proposés à un gestionnaire d'entrepôt et mis en œuvre dans cet entrepôt.

Ce système 20 comporte un dispositif de contrôle 200 et une plateforme logistique 100.

Le dispositif de contrôle 200 peut être un module (ou un ensemble de modules) logiciel mis en œuvre sur un ordinateur. L'ordinateur et le module logiciel disposent des interfaces de communication lui permettant de transmettre des données d'une part avec le l'outil PGI, 3, de l'entrepôt 10, et avec la plateforme logistique 100.

La plateforme logistique 100 est constitué d'un ensemble de moyens matériels et logiciels. Elle comporte notamment un bras préhenseur robotisé, un espace de stockage temporaire et un convoyeur 105 faisant lien avec les équipements logistiques de l'entrepôt 10.

Selon une mise en œuvre, le système de constitution de palettes 20 est donc piloté par l'outil PLI 2. L'outil PLI a notamment la connaissance des commandes des clients (et des délais associés à ces commandes), des stocks, et est à même de déclencher la sortie des articles et la préparation des colis. Lorsqu'une commande est déclenchée, les informations liées à cette commande sont transmises au système de constitution de palette afin qu'il soit à même de traiter correctement les colis 101 transmis via le convoyeur 105 et la constitution d'une ou plusieurs palettes correspondant à la commande.

Il est à noter que plusieurs commandes peuvent être traités simultanément, en fonction du dimensionnement du système de constitution de palettes 20.

Selon le procédé proposé, le dispositif de contrôle 200 est prévu pour recevoir des informations 3 relatives à un ensemble de colis. Ces informations comportent au moins des dimensions pour chaque colis, c'est-à-dire une longueur, une largeur et une hauteur. Elles peuvent comporter, pour chaque colis, d'autres informations comme des données de poids, etc.

En outre, les informations sont prévues pour établir un lien entre les colis et une commande, et/ou, le cas échéant, un ordre de fabrication. Ainsi, à sa réception, le dispositif de contrôle peut connaître l'ensemble des colis constitutifs d'une commande ainsi que les informations qui lui sont nécessaires pour constituer une ou plusieurs palettes correspondant à cette commande (ou à cet ordre de fabrication, OF).

A partir de ces informations, le dispositif de contrôle peut établir un plan de palette. Si plusieurs palettes doivent être constituées pour une même commande (ou ordre de fabrication), autant de plans de palettes seront constitués.

Ce plan de palette spécifie quel colis doit être positionné à quel endroit dans la palette à constituer. Il peut également spécifier une rotation du colis, de sorte à permuter ses dimensions (largeur, longueur, hauteur), et d'ainsi offrir davantage de degré de liberté dans la détermination d'un plan de palette optimal.

Ce plan de palette est destiné à être fourni au bras préhenseur robotisé afin qu'il puisse sélectionner les colis dans un ordre adéquat et les positionner au bon endroit (et selon la bonne orientation) sur la palette. Notamment, cela implique que les colis constituant la couche inférieure doivent être positionnés avant ceux qui prendront place au-dessus.

Selon des modes de réalisation, ce plan de palette peut répondre à des contraintes telles que :
- La palette terminée doit être la plus uniforme possible (en volume) et être stable durant la phase de constitution et une fois constituée pour faciliter le transport ;
- Le centre de gravité doit être le plus bas et le plus centré possible. Cela permet notamment d'améliorer la stabilité de la palette terminée, lors de la phase de transport.
- Le positionnement des cartons est prévu pour utiliser une vaste surface de la palette, préférentiellement un maximum (c'est-à-dire la totalité moins une marge facilitant le transport et pouvant varier en fonction des transporteurs).
- La hauteur de la palette terminée doit également être prévu en fonction des contraintes de transport, le plus souvent imposées par le transporteur.
- Il est important de minimiser le nombre de palettes pour un même ordre de fabrication, et pour une même commande.

Différentes méthodologies peuvent être employées pour la détermination du plan de palette en fonction des données d'entrées. Ces données d'entrées comprennent les informations relatives aux colis à mettre en palette, mais aussi, éventuellement, des contraintes fournies par l'opérateur de l'entrepôt 10, le transporteur, etc.

Selon un mode de réalisation, la détermination du plan de palette peut être effectuée en deux étapes.

Dans une première étape, une première solution est définie, de façon déterministe. Cette solution peut être sous-optimale.

Elle peut consister à positionner les colis les uns après les autres jusqu'à ce que tous les colis soient placés ou bien qu'un autre critère d'arrêt soit rencontré (par exemple un poids ou un volume maximum soit atteint).

Selon un mode de réalisation, les différentes orientations possibles des colis sont également testées, en simulant les rotations du colis selon les trois axes. En effet, dans la mesure où les colis ne sont pas cubiques (c'est-à-dire spatialement symétriques), leurs orientations influent sur les possibilités d'agencement des colis pour former une palette optimale.

Il peut être envisagé que certaines orientations ne soient pas autorisées par les informations relatives aux colis, par exemple en fonction de la fragilité des articles contenus.

Dans une seconde étape, cette première solution, sous-optimale, peut être améliorée en réalisant des modifications de cette solution pendant un temps contraint, et en mesurant un score de cette nouvelle solution par rapport à la solution précédente. Lorsqu'une meilleure solution est trouvée, elle devient la nouvelle solution courant à partir de laquelle s'effectuent les nouvelles modifications.

Ces modifications peuvent consister à effectuer des rotations ou des permutations des colis de façon aléatoire.

Selon un mode de réalisation, une méthode utilisée est une méthode répondant à la problématique bien connue de « remplissage de sacs » ou « *bin packing* » en anglais. Cette problématique peut se formuler comme la recherche d'une solution pour placer un ensemble d'éléments fixés dans des groupes (ou « sacs ») de même capacité en utilisant le moins possible de groupes.

Il s'agit d'un problème NP-complet pour lequel de nombreux algorithmes d'optimisation existent, du fait de l'application de cette problématique à de nombreux domaines techniques.

Selon un mode de réalisation, une méthode heuristique peut être utilisée.

Parmi ces méthodes heuristiques, on peut citer des algorithmes comme l'algorithme de « *first-fit decreasing* » (FFD) qui consiste à mettre en place une phase préalable de tri avant la phase d'optimisation proprement dite.

La qualité de cet algorithme est de rester rapide même si le nombre d'objets augmente considérablement tout en approchant de moins d'un facteur 2 la solution optimale. Ce type d'algorithme est aussi appelé algorithme glouton, car il mange les données au fur et à mesure et ne remet jamais en cause une décision prise auparavant.

Ces méthodes et algorithmes sont abondamment décrits dans la littérature. On pourra se reporter aux pages Wikipédia concernées, ou bien, par exemple à Joseph El Hayek, « Le problème de bin-packing en deux-dimensions, le cas non-orienté : résolution approchée et bornes inférieures. Modélisation et simulation », Université de Technologie de Compiègne, 2006. Français. ffNNT : ff. fftel-00158728f (HAL Id: tel-00158728).

Selon un mode de réalisation, la dimension des cartons peut appartenir à un ensemble fini et connu de dimensions possibles (puisque les « cartons » servant à constituer les colis doivent être disponibles et répertoriés au sein de l'entrepôt 10). Cela permet de limiter le parcours dans le processus d'optimisation permettant de déterminer le plan de palette, et donc d'améliorer la vitesse de convergence et/ou la qualité de la solution trouvée.

La **figure 2** schématise une plateforme logistique 100, selon un mode de réalisation du système de constitution de palettes 20.

Dans le mode de réalisation illustré en figure 2, deux sous plateformes sont représentées, dont une en pointillées uniquement pour la clarté de l'illustration. Selon d'autres modes de réalisation, une unique sous-plateforme constitue la plateforme logistique 100, ou bien, cette dernière est constituée de plus de deux sous-plateformes.

Selon ce mode de réalisation, les colis sont transmis depuis l'entrepôt au moyen d'un premier convoyeur 111.

Un dispositif d'aiguillage 110 (comme une plateforme rotative) peut être ensuite prévu pour aiguiller le colis vers l'une ou l'autre des sous-plateformes. Chaque sous-plateforme peut être affectée à une commande ou un ordre de fabrication donné à un instant donné.

Aussi cet aiguillage peut être effectué en fonction de la commande (ou éventuellement à l'ordre de fabrication) à laquelle le colis est associé.

Pour ce faire, un lecteur optique peut être prévu, en amont du dispositif d'aiguillage 110 afin de lire et décoder une étiquette apposée sur le colis 101. Cette étiquette peut par exemple comporter une étiquette optique comme un QR code, un code à barre, etc.

D'autres dispositifs sont également possibles comme un étiquette radio, de type RFID (pour « *Radio - Frequency Identification* » en anglais).

Quel que soit la technologie sous-jacente, cette étiquette peut encoder un identifiant d'une commande ou d'un ordre de fabrication, et/ou un identifiant de colis.

De la sorte un mécanisme peut ainsi être mis en place pour, suite à la détermination de la commande associée à un colis reçu, aiguiller celui-ci vers le convoyeur 105 d'une sous-plateforme de destination déterminée en fonction d'un identifiant (d'une commande d'un ordre de fabrication, d'un colis...) et, éventuellement, des informations 3.

Si l'étiquette apposée sur le colis 101 encode un identifiant de la commande ou de l'ordre de fabrication, ce décodage permet de déterminer directement la sous-plateforme de destination (associée à la palette correspondante), et donc le convoyeur associé 105.

Si l'étiquette apposée sur le colis 101 encode un identifiant du colis, alors les informations 3 relatives à l'ensemble des colis reçues de l'outil PRI 2 sont prévues pour permettre de mettre en correspondance cet identifiant de colis avec une commande (et le cas échéant un ordre de fabrication) associée.

Dans une étape suivante, le procédé proposé comprend le stockage de colis 101 reçus au moyen d'un convoyeur 105, dans un espace de stockage temporaire 104, au moyen d'un bras préhenseur robotisé 102.

Cet espace de stockage temporaire 104 appartient donc à la plateforme logistique 100 (ou à chaque sous-plateforme, selon certains modes de réalisation). Il s'agit typiquement d'un espace de stockage vertical, ou armoire, comportant une pluralité de compartiments pouvant chacun stocker un ou plusieurs colis. Plusieurs armoires peuvent être disponibles ainsi que représenté en figure 2.

Préférentiellement, l'espace de stockage temporaire 104 comporte plusieurs armoires, ou stockeurs, verticaux identiques en dimension et en nombre de compartiments (ou tiroirs). Par exemple, une armoire peut disposer de 20 tiroirs.

Le bras préhenseur robotisé 102 appartient également à la plateforme logistique 100 (ou chaque sous-plateforme, selon certains modes de réalisation). Il dispose de plusieurs degrés de liberté dans ses mouvements afin de pouvoir accéder aux différents compartiments de l'espace de stockage temporaire 104, ainsi qu'à une palette 103 en cours de constitution, qui peut être disposé sur un convoyeur de palettes 106 ou sur un robot mobile, et aux colis 101 reçus.

Ces différents éléments doivent donc être disposés de façon à coopérer de façon optimale avec le bras préhenseur robotisé.

Selon un mode de réalisation, le bras préhenseur robotisé 102 est placé sur un chariot pouvant se déplacer le long d'un rail. Ce rail peut être positionné longitudinalement et parallèlement à une face de l'ensemble de stockage temporaire 104 permettant l'accès aux compartiments de stockage. Le bras préhenseur robotisé 103 peut ainsi se déplacer le long des différentes armoires de stockage 104.

Une position (au moins) sur ce rail permet l'accès du bras préhenseur robotisé au colis reçu. Dans un mode de réalisation, le colis 101 est reçu via un convoyeur 105 agencé parallèlement au rail du bras préhenseur robotisé 102, de sorte qu'une multitude de position permettent l'accès de ce bras aux colis reçus. Selon un mode de réalisation, le convoyeur 105 peut être prévu pour stopper le colis 101 à une position correspondant à un compartiment de stockage déterminé afin de minimiser les tâches du bras préhenseur robotisé (par exemple face à l'armoire correspondante et à la verticale du compartiment).

Une position (au moins) de ce rail permet l'accès du bras préhenseur robotisé 102 à la palette 103 en cours de constitution. Cette position peut être située substantiellement à une extrémité du rail, afin de permettre une disposition en « L », dont l'espace vide permet d'une part l'accès à un opérateur humain en cas de nécessité, et aussi de remiser des colis qui seraient en erreur (c'est-à-dire donc le bras 102 ne pourrait pas disposer sur la palette 103 en cours de constitution, pour différentes raisons).

Selon une variante, des armoires de stockage sont positionnées de part et d'autre de l'axe de déplacement du bras préhenseur robotisé 102, et la remise des colis en erreur peut alors se faire à partir d'une position à l'écart de ces armoires, par exemple depuis une position opposée à la position d'accès à la palette 103 en cours de constitution.

Un bras préhenseur robotisé est un dispositif mécanique conçu pour saisir et manipuler des objets de manière similaire à un bras humain. Il dispose de plusieurs articulations permettant une grande flexibilité de mouvement. Ces articulations et autres organes commandant un degré de liberté sont pilotés par un organe de gestion qui peut être embarqué ou déporté, et adapté à communiquer avec le dispositif de contrôle 200.

Il peut comporter une pince adaptée pour la préhension des colis 101. D'autres mécanismes de préhension peuvent être également envisagés.

A titre d'exemple, ce bras préhenseur peut être un robot industriel produit par la société Kuka. Ces robots sont largement utilisés dans l'automatisation industrielle pour effectuer une variété de tâches, notamment le soudage, l'assemblage, la peinture, la manipulation de matériaux et bien d'autres

Selon un mode de réalisation, le bras préhenseur robotisé 102 est associé à une caméra permettant de détecter l'orientation du colis sur le convoyeur, et d'ainsi actionner la pince de façon appropriée. En effet, contrairement à beaucoup d'applications industrielles où le robot intervient dans un processus contraint et bien défini, l'arrivée des colis est ici peu contrainte car la mise à disposition sur le convoyeur est un événement extérieur au système 20. Ils peuvent donc arriver selon n'importe quelle orientation.

Le bras préhenseur robotisé 103 peut être prévu pour déterminer l'emplacement des colis reçus dans l'espace de stockage en fonction de la taille des colis et de l'identifiant de la palette associée. De préférence, les colis devant aller sur une même palette sont placés dans un même tiroir (ou compartiment). Afin de faire travailler tous les appareils de manière équilibrée, les stockeurs sont chargés en répartition de charge : lors de l'arrivée d'un colis correspondant à une nouvelle palette, il est orienté vers le stockeur le moins rempli, sauf si celui-ci est en utilisé pour constituer une palette 103.

La localisation de chaque colis au sein de l'espace de stockage temporaire 104 est mémorisée afin de pouvoir directement les prélever plus tard, au moment de la constitution de la palette.

La plateforme logistique 100 dispose également d'une interface de communication permettant un dialogue (ou protocole d'échange) entre l'espace de stockage temporaire 104 et le bras préhenseur robotisé 102.

En particulier, l'espace de stockage temporaire 104 et le bras préhenseur robotisé 102 peuvent ainsi dialoguer afin de permettre l'accès dudit bras préhenseur robotisé à un emplacement déterminé dudit espace de stockage temporaire. Le bras peut ainsi requérir le déplacement et l'ouverture d'un compartiment afin d'y stocker ou d'y prélever un colis.

Selon un mode de réalisation, le dialogue peut se faire via le protocole LINK par le truchement du logiciel de gestion associé à l'espace de stockage temporaire 104. Ce protocole est basé sur des requêtes TCP/IP permettant d'effectuer certaines tâches sur les armoires.

Comme il a été vu précédemment, les colis reçus et acheminés via le convoyeur 111 peuvent appartenir à différentes commandes ou ordres de fabrication. Ils peuvent être aiguillés vers différentes sous-plateformes logistiques en fonction de cette commande (ou ordre de fabrication). Il est toutefois possible que davantage de commandes (et a fortiori ordres de fabrication) soient en préparation qu'il existe de sous-plateformes.

Dès lors, des colis de différentes commandes peuvent être acheminés jusqu'au convoyeur 105 d'une sous-plateforme. Ceux-ci seront stockés dans l'espace de stockage temporaire 104.

Il est proposé que lorsque l'ensemble (c'est-à-dire la totalité) des colis est stocké dans l'espace de stockage temporaire 104, le bras préhenseur robotisé 102 commence à constituer la palette 103 correspondant. Autrement dit, c'est la disponibilité de l'ensemble des colis constitutifs d'une palette au sein de l'espace de stockage temporaire 104 qui forme l'événement déclencheur de la préparation de la palette. Cet espace de stockage temporaire 104 forme donc une sorte de « tampon » ou « buffer » en attendant la disponibilité de la totalité des colis.

Ainsi, en cas d'indisponibilité ou de retard d'un colis, par exemple, on évite d'avoir une palette en cours de constitution pendant un lapse de temps trop important, qui nuirait à la productivité du système.

Lorsque les colis correspondant à une palette à constituer (donc d'une commande ou d'un ordre de fabrication) sont disponibles dans l'espace de stockage temporaire, on constitue la palette 103 au moyen du bras préhenseur robotisé 102, en sélectionnant les colis dans l'espace de stockage 104 selon un ordre dépendant du plan de palette, et en les positionnant sur la palette, successivement, selon ce plan de palette.

Connaissant en effet à la fois la localisation des colis dans l'espace de stockage temporaire 104 et le plan de palette, le bras préhenseur robotisé 102 est apte à prélever les colis dans l'ordre appropriée dans le bon compartiment de l'espace de stockage puis de le positionner au bon endroit de la palette.

L'ordre de sélection des colis dans l'espace de stockage est évidemment important puisque les colis devant être dans la couche inférieure selon le plan de palette doivent être sélectionnés et positionnés avant ceux constituants les couches supérieures.

Comme on a vu précédemment, le plan de palette peut comprendre une orientation du colis, de sorte que le positionnement du colis sur la palette comprend une rotation de ce colis par le bras préhenseur robotisé 102, selon à la fois des données d'orientation cible contenues dans le plan de palette, et des données d'orientation courantes obtenues par un dispositif de détection associé au bras préhenseur robotisé. Ce dispositif de détection peut typiquement être la caméra précédemment évoquée.

Ainsi, on détecte l'orientation du colis tel que sais par le bras préhenseur robotisé 102 et on le compare à l'orientation prévue par le plan de palette. Le bras préhenseur robotisé peut alors effectuer les rotations nécessaires pour ajuster l'orientation du colis à celle du plan de palette.

Le processus est itératif : le bras préhenseur robotisé sélectionne successivement les colis dans l'espace de stockage 104, selon un ordre défini par le plan de stockage, puis les positionne sur la palette à l'emplacement adéquat. Le processus stoppe lorsque la totalité des colis prévus pour la palette a été positionnée sur cette palette.

La palette est alors constituée et supporte l'ensemble des colis prévus.

Un convoyeur 106 peut l'évacuer hors du système de constitution de palette 10. Une palette vide peut alors prendre sa place afin qu'une nouvelle palette puisse être constituée.

Selon un autre mode de réalisation, le palette en cours de constitution est positionnée sur un robot mobile. Un tel robot mobile peut être prévu pour se déplacer jusqu'à proximité du bras préhenseur mobile robotisé et comporter une surface adaptée à la réception des colis pour leur transport. Il peut alors sortir de la zone correspondant à la plateforme logistique 100 pour évacuer le colis déposé sur la surface de réception.

La plateforme logistique 100 peut comporter des moyens pour appeler le robot mobile à proximité du bras préhenseur robotisé. Ces moyens peuvent comprendre une télécommande adaptée pour l'actionnement par le bras préhenseur robotisé. Cette télécommande peut comporter un ou plusieurs boutons que le bras préhenseur robotisé peut presser pour déclencher la transmission d'un signal vers le robot mobile.

Une télécommande peut par exemple comporter plusieurs boutons correspondants chacun à une zone où le robot mobile doit se positionner (par exemple correspondant à une armoire particulière parmi l'ensemble de stockage 104). Dans un autre exemple, plusieurs télécommandes peuvent être prévues, chacun munie d'un unique bouton et correspondant à une zone déterminée.

A réception d'un signal d'appel émis par la ou une des télécommandes, le robot mobile se positionne à proximité du bras préhenseur robotisé afin que celui-ci puisse déposer les colis de la commande, ou de l'ordre de fabrication, correspondant à la palette 103 positionnée sur le robot mobile.

Il peut toutefois subvenir des situations d'erreur. Par exemple, un colis non prévu a été apporté sur le convoyeur 105. Selon un mode de réalisation, il ne peut être traité automatiquement par le système de constitution de palette 10 et doit être traité par un opérateur humain. Il doit donc être évacué de la plateforme logistique 100 afin de revenir dans un mode de traitement humain.

En particulier, selon un mode de réalisation, si un colis ne peut pas être positionné sur la palette 103, ce colis est évacué par le bras préhenseur robotisé 102 vers un dispositif d'évacuation. Ce moyen d'évacuation peut être une zone dédiée autour du bras préhenseur robotisé où un opérateur humain viendra le prélever. Il peut également s'agir d'un convoyeur dédié ou d'un robot mobile.

Bien entendu, la présente invention n'est pas limitée aux exemples et au mode de réalisation décrits et représentés, mais est défini par les revendications. Elle est notamment susceptible de nombreuses variantes accessibles à l'homme de l'art

## Revendications

1. Procédé de constitution automatique d'une palette (103) supportant un ensemble de colis (101) appartenant à une commande, comprenant des étapes de
- réception d'informations (3) relatives audit ensemble de colis comportant au moins des dimensions pour chaque colis ;
- établissement d'un plan de palette à partir desdites informations ;
- aiguillage de colis (101) vers un convoyeur (105) d'une sous-plateforme affectée à ladite commande ;
- stockage desdits colis (101) reçus au moyen dudit convoyeur (105) dans un espace de stockage temporaire (104) par un bras préhenseur robotisé (102) ;
- lorsque ledit ensemble de colis est stocké dans ledit espace de stockage temporaire, constitution de ladite palette (103) par ledit bras préhenseur robotisé (102), en sélectionnant lesdits colis dans ledit espace de stockage (104) selon un ordre dépendant dudit plan de palette, et en les positionnant sur ladite palette, successivement, selon ledit plan de palette.

2. Procédé selon la revendication précédente, dans lequel ledit positionnement comprend une rotation dudit colis par ledit bras préhenseur robotisé, selon des données d'orientation cible contenues dans ledit plan de palette, et des données d'orientation courantes obtenues par un dispositif de détection associé audit bras préhenseur.

3. Procédé selon l'une des revendications précédentes, dans lequel un colis reçu est identifié par un lecteur optique adapté pour décoder une étiquette apposée sur ledit colis reçu.

4. Procédé selon l'une des revendications précédentes, dans lequel lesdites étapes de stockage et de sélection comprennent un dialogue afin de permettre l'accès dudit bras préhenseur robotisé à un emplacement déterminé dudit espace de stockage temporaire.

5. Procédé selon l'une des revendications précédentes, dans lequel ledit plan de palette est déterminé en fonction de données de poids associés à chaque colis contenu dans lesdites informations, afin de positionner un centre de gravité final de ladite palette dans une zone substantiellement basse et centrale de ladite palette.

6. Procédé selon l'une des revendications précédentes, dans lequel plusieurs palettes sont constitués à partir dudit ensemble de colis.

7. Procédé selon l'une des revendications précédentes, dans lequel ladite palette (103) est positionnée sur un robot mobile, ledit robot mobile pouvant être appelé à proximité dudit bras préhenseur robotisé par l'actionnement d'une télécommande par ledit bras préhenseur robotisé.

8. Système (10) pour la constitution automatique d'une palette (103) supportant un ensemble de colis (101) appartenant à une commande, comportant un dispositif de contrôle (200) et une plateforme logistique (100), ledit dispositif de contrôle (200) étant adapté pour la réception d'informations relatives audit ensemble de colis comportant au moins des dimensions pour chaque colis, et pour l'établissement d'un plan de palette à partir desdites informations, et ladite plateforme logistique (100) comportant un aiguillage (110) pour aiguiller des colis (101) vers un convoyeur (105) d'une sous-plateforme affectée à ladite commande, un espace de stockage temporaire (104), un convoyeur (105) et un bras préhenseur robotisé (102), adaptés pour stocker lesdits colis (101) reçus au moyen dudit convoyeur (105) dans ledit espace de stockage temporaire (104) par ledit bras préhenseur robotisé (102), et pour, lorsque ledit ensemble de colis est stocké dans ledit espace de stockage temporaire, constituer ladite palette (103) par ledit bras préhenseur robotisé (102), en sélectionnant lesdits colis dans ledit espace de stockage (104) selon un ordre dépendant dudit plan de palette, et en les positionnant sur ladite palette, successivement, selon ledit plan de palette,

9. Programme d'ordinateur apte à être mis en œuvre sur un ordinateur associé à un système (20) de préparation de palettes, comprenant des instructions de code qui, lorsqu'il est exécuté par un processeur, réalise les étapes du procédé défini dans les revendications 1 à 7.
